# EUROPÄISCHE PATENTSCHRIFT

(11) **EP 0 656 488 B1**
(45) Veröffentlichungstag und Bekanntmachung des Hinweises auf die Patenterteilung: **27.11.1996**
(21) Anmeldenummer: 94108760.3
(22) Anmeldetag: 08.06.1994
(51) Int. Cl.: F16F 15/14

(54) **Drehschwingungstilger**
Torsional vibration damper
Amortisseur de vibrations rotatives

(30) Priorität: 26.11.1993 DE 4340293
(43) Veröffentlichungstag der Anmeldung: 07.06.1995
(73) Patentinhaber: Firma Carl Freudenberg, D-69469 Weinheim (DE)
(72) Erfinder: Eckel, Hans-Gerd, Dr., D-69515 Laudenbach (DE); Kunkel, Anja, D-69483 Siedelsbrunn (DE); Müller, Michael, Dr., D-64297 Darmstadt (DE)

(56) Entgegenhaltungen:
- DE-U- 1 812 067
- FR-A- 773 520
- GB-A- 598 811
- US-A- 1 627 917
- US-A- 3 829 052

## Beschreibung

Die Erfindung betrifft einen Drehschwingungstilger gemäß Oberbegriff des Anspruchs 1.

Ein solcher Drehschwingungstilger ist aus der DE-U-18 12 067 bekannt. Die Trägheitsmassen sind als Pendel ausgebildet und an einem mit der Welle fest verbundenen Teil in Elementen aus Gummi gelagert, wobei die Pendel und die Elemente durch Vulkanisation miteinander verbunden sind.

Drehschwingungstilger gelangen beispielsweise an der Kurbelwelle einer Verbrennungskraftmaschine zur Anwendung und gehen aus von der Erkenntnis, daß die Trägheitsmassen fliehkraftbedingt bestrebt sind, die Achse bei Einleitung einer Drehbewegung im größtmöglichen Abstand zu umkreisen. Sie sind auf Schwenkachsen gelagert, die in der Zwischenzone zwischen ihrem Schwerpunkt und der Achse angeordnet sind. Drehschwingungen, die die Drehbewegung überlagern, haben als Folge hiervon eine Relativbewegung der Trägheitsmassen in radialer Richtung nach innen zur Folge, die geeignet ist, dämpfend auf die erregenden Drehschwingungen zu wirken. Die dabei erreichte Effektivität ist noch nicht in vollem Maße befriedigend. Außerdem treten in der An- und Auslauflaufphase der Verbrennungskraftmaschine Klappergeräusche auf.

Der Erfindung liegt die Aufgabe zugrunde, einen solchen Drehschwingungstilger derart weiterzuentwickeln, daß sich in einem großen Frequenzbereich eine Verbesserung der Dämpfungswirksamkeit ergibt und daß Klappergeräusche in der An- und Auslaufphase sicher vermieden werden.

Diese Aufgabe wird erfindungsgemäß bei einem Drehschwingungstilger der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Drehschwingungstilger ist es vorgesehen, daß die Trägheitsmassen und der Nabenteil durch zumindest ein biegeweiches Band verbunden sind und daß das Band die Zugelemente ausbildet. Radiale Relativverlagerungen der Trägheitsmassen setzen bei dem erfindungsgemäßen Drehschwingungstilger eine elastische Deformierung der Rückstellfedern voraus. Die Trägheitsmassen können sich dadurch in radialer Richtung nicht frei bewegen, was das Auftreten von Klappergeräuschen während der An- und Auslaufphase der mit dem Drehschwingungstilger ausgestatteten Welle ausschließt.

Durch die Wirkung der Rückstellfedern wird außerdem erreicht, daß Relativverlagerungen der Trägheitsmassen stets von mehr oder weniger großen Reaktionskräften begleitet sind, die auf die Welle übertragen werden. Mit dem erfindungsgemäßen Drehschwingungstilger läßt sich hierdurch praktisch unabhängig von der jeweiligen Drehzahl bei Einleitung von Drehschwingungen stets eine gute Tilgerwirkung erreichen.

Die Trägheitsmassen und der Nabenteil sind durch zumindest ein biegeweiches Band verbunden, wobei das Band die Zugelemente ausbildet. Für eine Großserienproduktion hat sich eine derartige Ausgestaltung als vorteilhaft bewährt. Dieses kann durch die sich während der bestimmungsgemäßen Verwendung ergebenden Fliehkräfte nicht dehnbar ausgebildet sein und beispielsweise aus einem Drahtseil oder einem dünnen Blechstreifen bestehen.

Nach einer anderen Ausgestaltung ist es vorgesehen, daß das Band durch die sich während der bestimmungsgemäßen Verwendung ergebenden Fliehkräfte elastisch dehnbar ist und beispielsweise aus einer Ringwendelfeder besteht.

Der Drehschwingungstilger läßt sich besonders einfach erzeugen, wenn nur ein Band vorgesehen ist, das alle Trägheitsmassen radial außenseitig und den Nabenteil im Bereich von daran festgelegten, achsparallelen Vorsprüngen innenseitig umgreift. Es kann bei einer solchen Ausführung endlos ineinander übergehend ausgebildet sein und in Umfangsrichtung aufeinanderfolgend abwechselnd eine Trägheitsmasse radial außenseitig und einen Vorsprung des Nabenteils radial innenseitig umschlingen.

Als vorteilhaft hat es sich bewährt, wenn jeder Trägheitsmasse zwei Vorsprünge des Nabenteils zugeordnet sind, die in Umfangsrichtung einen Abstand voneinander haben. Die Vorsprünge können dabei einen kleinsten Abstand voneinander haben, der geringer ist als die Umfangslänge der zugehörigen Trägheitsmasse, wobei im Zwischenraum zwischen den Trägheitsmassen und den Vorsprüngen jeweils ein Aufspreizelement vorgesehen ist, das sich in Umfangsrichtung erstreckt und wobei die beiden von einer jeden Trägheitsmasse in Richtung der einander zugewandten Seiten der Vorsprünge vorstehenden Abschnitte des Bandes durch das Aufspreizelement in eine im wesentliche parallele gegenseitige Zuordnung gebracht sind.

Es hat sich als vorteilhaft bewährt, wenn zumindest alle eine Richtungsänderung des Bandes bewirkenden Oberflächenzonen der Trägheitsmassen, der Vorsprünge und/oder des Aufspreizelementes in Umfangsrichtung abgerundet ausgebildet sind. Die Dauerhaltbarkeit des während der bestimmungsgemäßen Verwendung einer ständigen Beugungsbeanspruchung ausgesetzten Bandes wird hierdurch wesentlich verbessert.

Eine besonders gute Dämpfungswirksamkeit läßt sich dann erzielen, wenn die Rückstellfeder aus einem elastomeren Werkstoff besteht, beispielsweise aus Gummi. Sie läßt sich bei einer solchen Ausbildung zusätzlich besonders einfach befestigen, beispielsweise durch unmittelbares Anvulkanisieren an die zu verbindenden Teile während der Formgebung und Verfestigung.

Um das Band vor Korrosion zu schützen, hat es sich als vorteilhaft bewährt, wenn es zumindest teilweise in den elastomeren Werkstoff eingebettet und gegebenenfalls mit diesem verklebt ist. Unerwünschte Relativverlagerungen, die zu einer Beeinträchtigung der Brauchbarkeit führen könnten, lassen sich dadurch unterdrücken.

Das Band kann aus einem Seil, einem ein- oder mehrlagigen Stahlband oder aus einem durch Kunststoffasern oder Stahlseile armierten Flachriemen bestehen. Zweckmäßig ist die Verwendung von Ausführungen, die eine besonders geringe Wandstärke in radialer Richtung haben. Die notwendige Zugfestigkeit wird bei solchen Ausführungen durch eine entsprechend große Breite, gemessen parallel zur Achse des Drehschwingungstilgers, erreicht.

Das Band ist zweckmäßig nach Art einer Schlaufe ringförmig geschlossen ausgebildet und außenseitig um die zu verbindenden Teile herumgelegt. Es ist im nichtdrehenden Zustand des Drehschwingungstilgers durch die Rückstellfeder in eine Gestalt überführt, die durch die sich während der bestimmungsgemäßen Verwendung ergebenden Fliehkräfte veränderbar ist.

Die Trägheitsmassen können bedarfsweise auch durch Zugelemente mit dem Nabenteil verbunden sein, die voneinander unabhängig sind. Eine solche Ausführung empfiehlt sich, wenn es erwünscht ist, Trägheitsmassen mit einem Nabenteil zu verbinden, die voneinander abweichende Abstände von dessen Achse haben und/oder eine voneinander abweichende Größe. In bezug auf die Erzielung einer Tilgerwirkung in einem großen Frequenzbereich ist eine solche Ausführung von besonderem Vorteil.

Der Gegenstand der Erfindung wird nachfolgend anhand der Zeichnungen weiter verdeutlicht. Es zeigen:
Fig. 1 in schematischer Darstellung eine erste Bauform des erfindungsgemäßen Drehschwingungstilgers
Fig. 2 in schematischer Darstellung eine zweite Bauform des erfindungsgemäßen Drehschwingungstilgers.

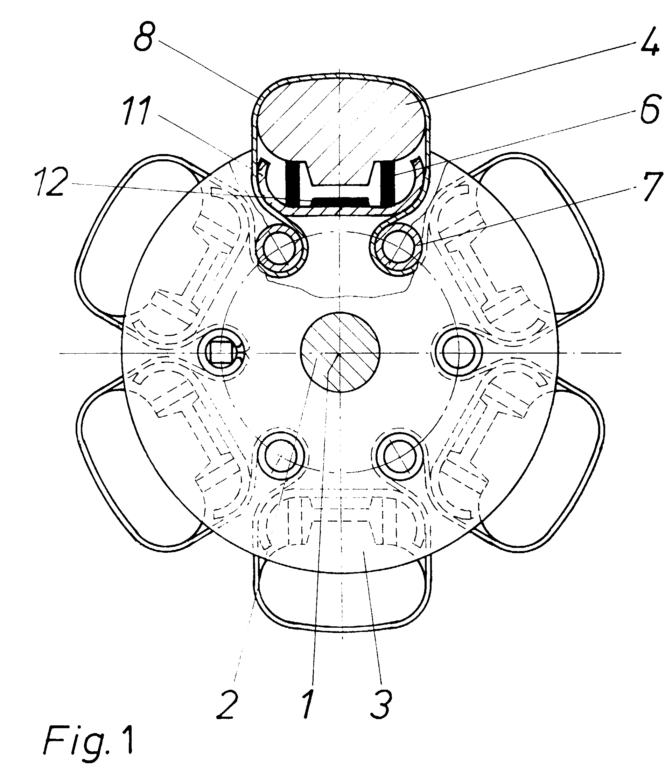

Der in der Figur 1 gezeigte Drehschwingungstilger ist für eine um eine Achse 1 rotierende Welle 2 bestimmt. Er umfaßt ein Nabenteil 3, welches drehfest mit der um die Achse 1 rotierbaren Welle 2 verbunden ist. Der sichtbare Bestandteil des Nabenteils 3 ist im wesentlichen flanschartig gestaltet. Im Bereich seines Außenumfangs sind gleichmäßig in Umfangsrichtung verteilte, sich parallel zu der Welle 2 erstreckende Vorsprünge 7 vorgesehen, die von zylindrischer Gestalt sind.

In Umfangsrichtung sind sechs Trägheitsmassen in gleichmäßigen Abständen verteilt, die durch ein biegeweiches Band 8 mit dem Nabenteil 3 verbunden sind. Das biegeweiche Band 8 ist endlos ineinanderübergehend ausgebildet und umschlingt abwechselnd die Trägheitsmassen 4 auf ihrer Außenseite und die einstückig mit dem Nabenteil 3 ausgebildeten Vorsprünge 7 innenseitig, wobei einer jeden Trägheitsmasse 4 zwei Vorsprünge 7 des Nabenteils 3 zugeordnet sind. Die beiden Vorsprünge bilden gewissermaßen jeweils ein Halterpaar, bezogen auf die jeweils radial außerhalb davon liegende Trägheitsmasse 4. Der in Umfangsrichtung gemessene, kleinste Abstand der Vorsprünge 7 voneinander ist geringer als die in Umfangsrichtung gemessene Länge der zugehörigen Trägheitsmasse 4. Um dennoch zu erreichen, daß die von den Trägheitsmassen 4 in Richtung der Achse 1 vorstehenden Enden des Bandes 8 sich parallel zueinander erstrecken, ist im Zwischenraum zwischen den Vorsprüngen 7 und den Trägheitsmassen 4 jeweils ein Aufspreizelement 11 angeordnet, das unter normalen Betriebsbedingungen nicht verformbar und einstückig mit dem Nabenteil 3 ausgebildet ist. Die Trägheitsmassen 4 sind durch zwei Rückstellfedern 6 auf dem Aufspreizelement 11 abgestützt . Die Rückstellfedern haben in Umfangsrichtung einen Abstand voneinander und sind ineinanderübergehend ausgebildet und in der Zwischenzone radial verdickt ausgeführt um einen Anschlagpuffer 12 zu bilden, mit dem die Trägheitsmassen 4 bei einer extrem großen, radial gerichteten Einwärtsbewegung in Eingriff gelangen können. Noch größere Relativbewegungen werden hierdurch verhindert und dadurch zugleich überlastungsbedingte Beschädigungen des Drehschwingungstilgers vermieden.

Alle eine Richtungsänderung des Bandes 8 bewirkenden Oberflächenzonen der Trägheitsmassen 4, der Vorsprünge 7 und der Aufspreizelemente 11 sind in Umfangsrichtung abgerundet ausgebildet. Eine Knickbeanspruchung des Bandes 8 wird dadurch verhindert und eine wesentlich verlängerte Gebrauchsdauer erzielt. Das Band 8 ist in bezug auf die sich bei der bestimmungsgemäßen Verwendung auftretenden Fliehkräfte zugfest und biegeweich gestaltet. Es besteht bei dem gezeigten Ausführungsbeispiel aus mehreren, in Richtung der Achse gesehen, nebeneinander angeordneten Lagen einer Stahlseilwicklung. Der Anfang und das Ende des Stahlseils sind mittels einer aufgepreßten Hülse in einem Hohlraum der Vorsprünge verankert. Der Hohlraum ist durch einen in Richtung der Achse weisenden Schlitz nach außen geöffnet, der dazu dient, die Enden des Seiles in das Innere zu führen.

Die Trägheitsmassen 4 sind in Umfangsrichtung beweglich und einerseits durch das Band 8 und andererseits durch Rückstellfedern 6 mit dem Nabenteil 1 verbunden. Sie werden in axialer Richtung beiderseits durch flanschartig gestaltete Bestandteile des Nabenteils 3 geführt, von denen der dem Betrachter zugewandte Teil in Fig. 1 aus Gründen der Anschaulichkeit teilweise weggelassen ist.

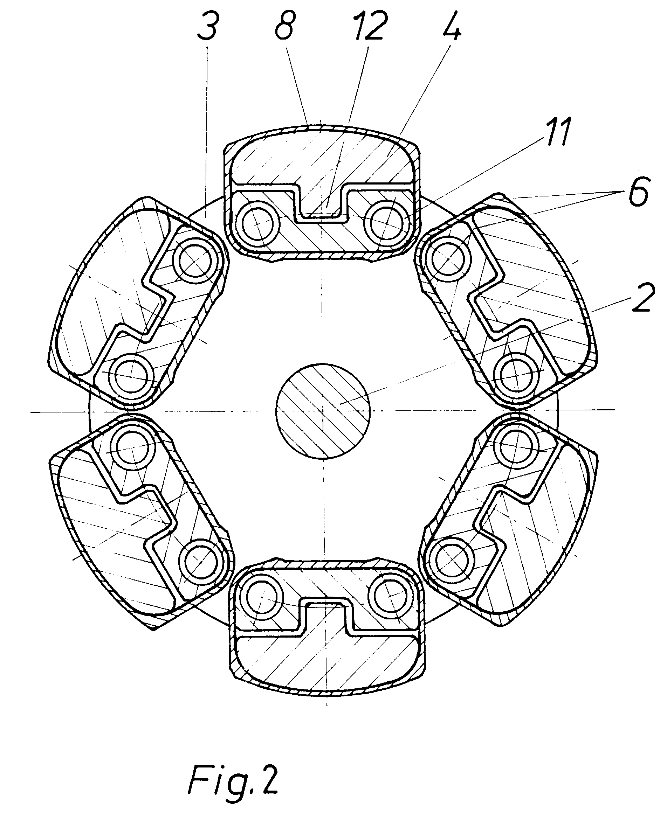

Fig. 2 zeigt eine weitere Ausführung des erfindungsgemäßen Drehschwingungstilgers in einer Ansicht von vorn, bei der das Aufspreizelement 11 zugleich die Fliehkräfte aufnimmt, die sich bei drehendem Drehschwingungstilger im Bereich der Trägheitsmassen 4 ergeben. Zur Einleitung der Fliehkräfte in das Nabenteil dient ein Band, das die Trägheitsmassen radial außenseitig und die Aufspreizelemente 11 radial innenseitig umschließt. Das Band ist in einen Körper aus elastomerem Werkstoff eingebettet, wobei der Werkstoffkörper so dimensioniert ist, daß er die Funktion einer Rückstellfeder übernimmt und bewirkt, daß die Trägheitsmassen 4 bei nichtdrehendem Drehschwingungstilger die in Fig. 4 gezeigte Position einnehmen, in der sie den kleinstmöglichen, radialen Abstand von der Achse des Drehschwingungstilgers haben. Die Einleitung von Drehschwingungen führt bei einer solchen Ausführung stets zu einer Vergrößerung des Abstandes.

Bei der in Fig. 2 gezeigten Lösung bietet es sich an, zwischen einer jeden Trägheitsmasse 4 und dem Aufspreizelement 11 einen Anschlagpuffer 12 zur Begrenzung der betriebsbedingt möglichen Auslenkbewegungen vorzusehen.

Die jeweils aus einer Trägheitsmasse 4, einem Aufspreizelement 11 und einem schlaufenartig in sich geschlossen ausgebildeten Band 8 bestehenden Einzelelemente können, wie in Fig. 2 gezeigt, in einer Sechserteilung zwischen stirnseitig angeordneten Nabenteilen gehalten werden. Das vordere Nabenteil ist in Fig. 2 aus Gründen der Anschaulichkeit nicht dargestellt. Um die erwünschte gegenseitige Verbindung zu erzielen, kann es dabei vorgesehen sein, daß an zumindest einem Teil zylindrische Ansätze vorgesehen sind, die Bohrungen der Aufspreizelemente 11 in axialer Richtung durchdringen. Die Ansätze können bedarfsweise auch durch Schrauben gebildet sein.

## Patentansprüche

1. Drehschwingungstilger für eine um eine Achse (1) rotierende Welle (2), umfassend ein mit der Welle (2) verbundenes Nabenteil (3), bei dem zumindest zwei im wesentlichen in Umfangsrichtung auslenkbare Trägheitsmassen (4) durch Zugelemente mit dem Nabenteil (3) derart verbunden sind, daß eine Veränderung des Abstands der Trägheitsmassen (4) von der Achse (1) bewirkt wird, wenn sich eine Auslenk bewegung ergibt, wobei jede Trägheitsmasse (4) durch zumindest eine Rückstellfeder im nichtdrehenden Zustand des Drehschwingungstilgers in eine Position überführbar ist, in der sie den Abstand von der Achse aufweist und wobei der Abstand durch die bei drehendem Drehschwingungstilger auf die Trägheitsmassen (4) einwirkenden Fliehkräfte unter elastischer Deformierung der Rückstellfedern (6) veränderbar ist, dadurch gekennzeichnet, daß die Trägheitsmassen (4) und der Nabenteil (3) durch zumindest ein biegeweiches Band (10) verbunden sind und daß das Band (10) die Zugelemente ausbildet.

2. Drehschwingungstilger nach Anspruch 1, dadurch gekennzeichnet, daß das Band (10) durch die Fliehkräfte nicht dehnbar ist.

3. Drehschwingungstilger nach Anspruch 1, dadurch gekennzeichnet, daß das Band durch die Fliehkräfte elastisch dehnbar ist.

4. Drehschwingungstilger nach einem der Ansprüche 1 bis 3, dadurch gekennzeichnet, daß nur ein Band (10) vorgesehen ist, das alle Trägheitsmassen (4) radial außenseitig und im Nabenteil (3) im Bereich von daran festgelegten, achsparallelen Vorsprüngen (7) innenseitig umschlingt.

5. Drehschwingungstilger nach Anspruch 4, dadurch gekennzeichnet, daß jeder Trägheitsmasse (4) zwei Vorsprünge (7) des Nabenteils (3) zugeordnet sind, die in Umfangsrichtung einen Abstand voneinander haben.

6. Drehschwingungstilger nach Anspruch 5, dadurch gekennzeichnet, daß die Vorsprünge (7) einen kleinsten Abstand voneinander haben, der geringer ist als die Umfangslänge der jeweils zugehörigen Trägheitsmasse (4) und daß im Zwischenraum zwischen den Trägheitsmassen (4) und den Vorsprüngen (7) jeweils ein Aufspreizelement (11) vorgesehen ist, das sich in Umfangsrichtung erstreckt und daß die beiden von einer jeden Trägheitsmasse (4) in Richtung der einander zugewandten Seiten der Vorsprünge (7) vorstehenden Enden des Bandes durch das Aufspreizelement in eine im wesentlichen parallele gegenseitige Zuordnung überführt sind.

7. Drehschwingungstilger nach einem der Ansprüche 1 bis 6, dadurch gekennzeichnet, daß zumindest die eine Richtungsänderung des Bandes (10) bewirkenden Oberflächenzonen der Trägheitsmassen (4), der Vorsprünge und/oder des Aufspreizelemetes (11) in Umfangsrichtung abgerundet ausgebildet sind.

8. Drehschwingungstilger nach einem der Ansprüche 1 bis 7, dadurch gekennzeichnet, daß die Rückstellfedern (6) aus einem elastomeren Werkstoff bestehen.

9. Drehschwingungstilger nach Anspruch 8, dadurch gekennzeichnet, daß das Band (10) zumindest teilweise in den elastomeren Werkstoff eingebettet ist.

10. Drehschwingungstilger nach einem der Ansprüche 1 bis 9, dadurch gekennzeichnet, daß das Band nach Art einer Schlaufe ringförmig geschlossen ausgebildet ist.

11. Drehschwingungstilger nach einem der Ansprüche 1 bis 3, dadurch gekennzeichnet, daß die Trägheitsmassen (4) durch voneinander unabhängige Zugelemente mit dem Nabenteil (3) verbunden sind.

12. Drehschwingungstilger nach einem der Ansprüche 1 bis 11, dadurch gekennzeichnet, daß Trägheitsmassen (4) vorgesehen sind, die bei nichtdrehendem Drehschwingungstilger unterschiedlich große Abstände von der Achse haben.

13. Drehschwingungstilger nach einem der Ansprüche 1 bis 12, dadurch gekennzeichnet, daß Trägheitsmassen (4) vorgesehen sind, die eine voneinander abweichende Größe haben.

## Claims

1. A torsional vibration damper for a shaft (2) which rotates about an axis (1), comprising a hub part (3) connected to the shaft (2), in which at least two inertia masses (4) which can be deflected essentially in the circumferential direction are connected to the hub part (3) by tension elements in such a way that a change in the distance of the inertia masses (4) from the axis (1) is brought about when a deflection movement results, it being possible in the non-rotating state of the torsional vibration damper for each inertia mass (4) to be moved by at least one restoring spring into a position in which it is at a distance from the axis, and the distance being variable with elastic deformation of the restoring springs (6) by means of the centrifugal forces acting on the inertia masses (4) when the torsional vibration damper is rotating, characterized in that the inertia masses (4) and the hub part (3) are connected by at least one flexible band (10), and in that the band (10) forms the tension elements.

2. A torsional vibration damper according to claim 1, characterized in that the band (10) cannot be stretched by the centrifugal forces.

3. A torsional vibration damper according to claim 1, characterized in that the band can be stretched elastically by the centrifugal forces.

4. A torsional vibration damper according to any one of claims 1 to 3, characterized in that only one band (10) is provided, which is wrapped around all the inertia masses (4) radially on the outer side and on the inner side in the hub part (3) in the region of axially parallel projections (7) fixed thereon.

5. A torsional vibration damper according to claim 4, characterized in that each inertia mass (4) is assigned two projections (7) of the hub part (3) which are spaced apart in the circumferential direction.

6. A torsional vibration damper according to claim 5, characterized in that the projections (7) have a very small spacing from one another which is less than the circumferential length of the respectively associated inertia mass (4), and in that a spreading element (11) which extends in the circumferential direction is provided respectively in the gap between the inertia masses (4) and the projections (7), and in that the two ends of the band projecting from each inertia mass (4) in the direction of the mutually facing sides of the projections (7) are moved by the spreading element into an essentially parallel arrangement relative to each other.

7. A torsional vibration damper according to any one of claims 1 to 6, characterized in that at least those surface zones of the inertia masses (4), of the projections and/or of the spreading element (11) bringing about a change in direction of the band (10) are of rounded configuration in the circumferential direction.

8. A torsional vibration damper according to any one of claims 1 to 7, characterized in that the restoring springs (6) consist of an elastomeric material.

9. A torsional vibration damper according to claim 8, characterized in that the band (10) is at least partially embedded in the elastomeric material.

10. A torsional vibration damper according to any one of claims 1 to 9, characterized in that the band is of a closed ring-like configuration in the manner of a loop.

11. A torsional vibration damper according to any one of claims 1 to 3, characterized in that the inertia masses (4) are connected to the hub part (3) by tension elements independent of one another.

12. A torsional vibration damper according to any one of claims 1 to 11, characterized in that inertia masses (4) are provided which, when the torsional vibration damper is not rotating, are at different distances from the axis.

13. A torsional vibration damper according to any one of claims 1 to 12, characterized in that inertia masses (4) are provided which have differing sizes relative to one another.

## Revendications

1. Amortisseur de vibrations rotatives pour un arbre (2) tournant autour d'un axe (1), comprenant un élément de moyeu (3) relié à l'arbre (2), pour lequel au moins deux masses d'inertie (4) pouvant être déviées essentiellement dans la direction circonférentielle sont reliées à l'élément de moyeu (3) par des éléments de traction, de manière à ce qu'une variation de la distance des masses d'inertie (4) par rapport à l'axe (1) soit causée lorsqu'un mouvement de déviation se produit, chaque masse d'inertie (4) pouvant, lorsque l'amortisseur de vibrations rotatives n'est pas en rotation, être amenée par au moins un ressort de rappel dans une position dans laquelle elle est située à une distance de l'axe et cette distance pouvant être modifiée, par déformation élastique des ressorts de rappel (6) sous l'effet des forces centrifuges agissant sur les masses d'inertie (4) lorsque l'amortisseur de vibrations rotatives tourne, caractérisé en ce que les masses d'inertie (4) et l'élément de moyeu (3) sont reliés par au moins une bande molle flexible (10) et en ce que la bande (10) forme les éléments de traction.

2. Amortisseur de vibrations rotatives selon la revendication 1, caractérisé en ce que la bande (10) ne peut pas être étirée par les forces centrifuges.

3. Amortisseur de vibrations rotatives selon la revendication 1, caractérisé en ce que la bande peut subir un étirement élastique par les forces centrifuges.

4. Amortisseur de vibrations rotatives selon l'une des revendications 1 à 3, caractérisé en ce qu'on prévoit une seule bande (10) qui entoure toutes les masses d'inertie (4) sur leur côté extérieur dans le sens radial et l'élément de moyeu (3) sur son côté intérieur dans la région de saillies (7) parallèles à l'axe fixées sur l'élément de moyeu.

5. Amortisseur de vibrations rotatives selon la revendication 4, caractérisé en ce qu'à chaque masse d'inertie (4) correspondent deux saillies (7) de l'élément de moyeu (3) qui sont situées à une distance l'une de l'autre dans la direction circonférentielle.

6. Amortisseur de vibrations rotatives selon la revendication 5, caractérisé en ce que les saillies (7) présentent entre elles une distance minimale qui est inférieure à la longueur dans le sens de la circonférence de la masse d'inertie respective correspondante (4), et en ce que l'on prévoit dans chaque espace intermédiaire entre les masses d'inertie (4) et les saillies (7) un élément écarteur (11) qui s'étend dans la direction circonférentielle, et en ce que les deux extrémités de la bande s'avançant depuis chacune des masses d'inertie (4) en direction des côtés des saillies (7) tournés l'un vers l'autre, ont une position réciproque essentiellement parallèle qui leur est donnée par l'élément écarteur.

7. Amortisseur de vibrations rotatives selon l'une des revendications 1 à 6, caractérisé en ce qu'au moins les zones de la surface des masses d'inertie (4), des saillies et/ou de l'élément écarteur (11) qui causent un changement de direction de la bande (10) sont arrondies dans la direction circonférentielle.

8. Amortisseur de vibrations rotatives selon l'une des revendications 1 à 7, caractérisé en ce que les ressorts de rappel (6) sont faits d'une matière élastomère.

9. Amortisseur de vibrations rotatives selon la revendication 8, caractérisé en ce que la bande (10) est enrobée, au moins partiellement, dans la matière élastomère.

10. Amortisseur de vibrations rotatives selon l'une des revendications 1 à 9, caractérisé en ce que la bande est fermée de manière annulaire à la manière d'une boucle.

11. Amortisseur de vibrations rotatives selon l'une des revendications 1 à 3, caractérisé en ce que les masses d'inertie (4) sont reliées à l'élément de moyeu (3) par des éléments de traction indépendants les uns des autres.

12. Amortisseur de vibrations rotatives selon l'une des revendications 1 à 11, caractérisé en ce qu'on prévoit des masses d'inertie (4) qui sont situées à des distances différentes de l'axe lorsque l'amortisseur de vibrations rotatives n'est pas en rotation.

13. Amortisseur de vibrations rotatives selon l'une des revendications 1 à 12, caractérisé en ce qu'on prévoit des masses d'inertie (4) qui ont des grandeurs différentes les unes des autres.
